# EUROPÄISCHE PATENTSCHRIFT

(11) **EP 1 842 077 B1**
(45) Veröffentlichungstag und Bekanntmachung des Hinweises auf die Patenterteilung: **19.10.2016**
(21) Anmeldenummer: 05823824.7
(22) Anmeldetag: 28.12.2005
(51) Int. Cl.: G01S 1/70, G01C 15/00, E02F 3/84, G05D 1/02

(54) **VERFAHREN ZUM ERMITTELN EINER LAGEINFORMATION MINDESTENS EINES OBJEKTS**
METHOD FOR DETERMINING A POSITIONAL INFORMATION OF AT LEAST ONE OBJECT
PROCÉDÉ POUR LA DÉTERMINATION D'UNE INFORMATION DE POSITIONNEMENT D'AU MOINS UN OBJET

(30) Priorität: 28.12.2004 EP 04030884
(43) Veröffentlichungstag der Anmeldung: 10.10.2007
(73) Patentinhaber: Leica Geosystems AG, 9435 Heerbrugg (CH)
(72) Erfinder: STEGMAIER, Peter, A., CH-6946 Ponte Capriasca (CH)
(74) Vertreter: Harmann, Bernd-Günther
(86) Internationale Anmeldenummer: PCT/EP2005/057203
(87) Internationale Veröffentlichungsnummer: WO 2006/070009

(56) Entgegenhaltungen:
- DE-A1- 3 107 674
- DE-A1- 3 526 564
- US-A- 3 687 556
- US-A- 4 309 758
- US-A- 5 600 436
- US-A- 6 052 181
- US-B1- 6 171 018
- US-B1- 6 324 455
- PATENT ABSTRACTS OF JAPAN Bd. 018, Nr. 298 (P-1749), 7. Juni 1994 (1994-06-07) & JP 06 059725 A (SEKISUI CHEM CO LTD), 4. März 1994 (1994-03-04)

## Beschreibung

Die Erfindung betrifft ein Verfahren zum Ermitteln einer horizontalen Lageinformation mindestens eines Objekts unter Verwendung wenigstens eines Rotationslasers, gemäss dem Oberbegriff des Anspruchs 1.

Durch die Einführung von hocheffizienten und für höchste Arbeitsleistungen ausgelegte Erdbewegungs- und Planierungsmaschinen konnten im Bereich des Strassen- und Tiefbaus, der Baulanderschliessung und des Tagebaus in den letzten Jahrzehnten grösste Fortschritte bezüglich der Arbeitsgeschwindigkeit erzielt werden. Mittels moderner Positionsbestimmungstechniken ist es zudem möglich, höchste Arbeitsgenauigkeiten zu erreichen, verbunden mit einem hohen Automatisierungsgrad und geringem Personaleinsatz. Mittels automatisierter Verfahren folgen die mobilen Arbeitsmaschinen einer computergenerierten Soll-Kontur, indem die jeweiligen Ist-Positionen der mobilen Arbeitsmaschinen mit den SollPositionen, die sich aus dem computergenerierten Soll-Modell ergeben, verglichen und entsprechende Interaktionen ausgelöst werden. Neben ebenen Flächen sind somit ebenfalls beliebige unebene Konturen herstellbar. Einen wesentlichen Bestandteil bildet hierbei die Positionsbestimmungstechnik der einzelnen Arbeitsmaschinen.

Eine mögliche, moderne Technik zur verhältnismässig genauen Bestimmung der Position einer mobilen Arbeitsmaschine stellen Satelliten-Positionsbestimmungssysteme wie beispielsweise das GPS-System dar. Hierzu wird eine GPS-Empfangseinheit an der mobilen Arbeitsmaschine angebracht, wodurch mit einer Genauigkeit von einigen Metern die absolute Position der Arbeitsmaschine bestimmbar ist. Da diese Genauigkeit in der Regel nicht ausreicht, kommen aus der GPS-Technik seit längerem bekannte Verfahren zur Erhöhung der Positionsgenauigkeit zur Anwendung, wie beispielsweise differenzielles GPS, RTK oder RTCM. Bei diesen Verfahren werden beispielsweise von einer Referenzstation direkt oder indirekt Korrekturwerte ausgesendet, welche die insbesondere von Refraktion in der Ionosphäre und Troposphäre herrührenden empfangsortspezifischen Fehler in den Satellitensignalen wiedergeben. Durch gleichzeitiges Empfangen der mit Fehlern behafteten Satellitensignale und der von der nahe gelegenen Referenzstation ausgesendeten Korrekturwerte durch die an der mobilen Arbeitsmaschine angebrachten GPS-Empfangseinheit ist eine zentimetergenaue Positionsbestimmung möglich.

Ein systembedingtes Problem der GPS-Technik besteht jedoch darin, dass die Messgenauigkeit in vertikaler Richtung geringer ist als die Messgenauigkeit in horizontaler Richtung. Da jedoch in der Regel, insbesondere im Bereich des Strassenbaus, die Anforderungen an die Bearbeitungsgenauigkeit in vertikaler Richtung grösser sind als an die Bearbeitungsgenauigkeit in horizontaler Richtung, da ungewollte Unebenheiten und Welligkeiten auf jeden Fall zu vermeiden sind, ist der alleinige Einsatz von GPS-Positionsbestimmungssystemen oft nicht ausreichend. Zudem muss zur Positionsbestimmung via GPS stets Sichtkontakt zu mindestens drei, vorzugsweise mindestens vier Satelliten bestehen, was jedoch vor allem bei Arbeiten unter Brücken, in engen Häuserfluchten oder aufgrund anderer Abschattungen nicht immer der Fall ist.

Ein weiteres Problem der GPS-Technik besteht insbesondere darin, dass mittels GPS zwar Positionen bestimmbar sind, jedoch bei Einsatz nur jeweils eines einzigen GPS-Empfängers die Ausrichtung der Arbeitsmaschine - insbesondere die azimutale Ausrichtung - nur aus einer Positionsveränderung abgeleitet werden kann. Folglich müssen entweder mehrere GPS-Empfänger an horizontal beabstandeten Stellen auf einer Arbeitsmaschine oder zusätzlich Ausrichtungssensoren wie beispielsweise Gyrosysteme oder Magnetkompasssysteme, die jedoch anfällig für Störmagnetfelder sind, eingesetzt werden.

Infolgedessen kann trotz der Existenz moderner Satellitenpositionsbestimmungssysteme bei entsprechenden Anforderungen an die Genauigkeit nicht auf den Einsatz von hochpräzisen optischen Messverfahren, wie sie aus der Geodäsie bekannt sind, verzichtet werden.

Seit längerem werden zur exakten Regelung der Arbeitshöhe von mobilen Arbeitsmaschinen Rotationslasersysteme verwendet, die einen im Wesentlichen in der horizontalen Ebene rotierenden Laserstrahl erzeugen. Hierdurch wird eine ebene Quasilaserscheibe erzeugt, die eine Sollebene für mindestens eine mobile Arbeitsmaschine definiert. Der rotierende Laserstrahl wird von einem auf der Arbeitsmaschine montierten Empfänger, der beispielsweise aus mehreren vertikal verteilten Detektoren besteht und gegebenenfalls höhenverstellbar ist, empfangen, wodurch hochgenau eine Höheninformation gewonnen werden kann. Ist auch die Position gewünscht, wird diese oft zusätzlich mit Hilfe von GPS-Systemen ermittelt.

Aus der US 4,807,131 ist ein Erdplanierungssystem bekannt, bei welchem auf einer mobilen Planiermaschine ein Detektor zum Empfangen einer Laserstrahlung, die von einem beabstandet von der Planiermaschine positionierten Rotationslaser emittiert wird, und Distanzmessmittel zum Ermitteln der horizontalen Positionierung der Planiermaschine in Bezug auf mindestens einen Referenzpunkt angeordnet sind. Somit ist es möglich, die Ist-Position der Planiermaschine vertikal und horizontal durch Einsatz zweier unterschiedlicher Messsysteme ausreichend genau zu bestimmen. Vermittels eines Gyroskops können Richtungs- und Positionsveränderungen erfasst werden. Auf einem Speichermedium ist die einzuebnende Sollkontur gespeichert. Die Ist-Messwerte werden mit Soll-Werten, die sich aus der gespeicherten Soll-Kontur ergeben, verglichen. Die Abweichungen werden in einem Display insbesondere durch graphische Darstellung der Soll- und der Ist-Kontur dargestellt und/oder dienen zur Regelung der Antriebe der Planiermaschine. Ein Nachteil dieses Systems besteht in der Notwendigkeit der Verwendung mindestens zweier Messsysteme, um das Fahrzeug sowohl vertikal, als auch horizontal mit hinreichender Genauigkeit steuern zu können.

Die DE 197 55 324 A1 beschreibt ein Verfahren und eine Vorrichtung zur Messung der Position und der Lage eines fahrenden Fahrzeugs in Bezug zu einem erdfesten Koordinatensystem. Das Fahrzeug besitzt zumindest zwei voneinander beabstandete drahtlose Entfernungs- und/oder Winkelmessgeräte, die auf voneinander beabstandete, in einem erdfesten Koordinatensystem eingemessene vorwählbare Referenzpunkte einer Referenzstrecke in benachbartem Gelände ausrichtbar sind. Die Bestimmung der Position erfolgt durch Triangulation. Durch einen Vergleich der ermittelten Ist-Position mit einer Soll-Position, die sich aus einer gespeicherten Soll-Raumkurve ergibt, werden Fahrzeugsteuerbefehle berechnet. Eine ausreichend präzise Erfassung einer Höheninformation ist mittels dieses Verfahrens nicht möglich.

In der EP 0 744 494 A1 wird ein Strassenfertigungssystem beschrieben, das mit einer Profilmesseinrichtung zur Bestimmung der Welligkeit des Strassenbelags relativ zu einer Referenzebene durch mechanische Abtastung der Oberfläche und einer GPS-Einheit zum Ermitteln der horizontalen Positionskomponente ausgestattet ist. Die Referenzebene wird durch einen langgestreckten Wagen erzeugt, so dass die hierdurch erzeugte Referenzebene einer Tiefpassfilterung der abgetasteten Oberfläche entspricht. Die dadurch ermöglichte Höhensteuerung ist jedoch ebenfalls nicht für die erforderlichen Genauigkeiten ausreichend. Weiters eignet sich dieses Verfahren nur für die Höhenregelung auf im Wesentlichen ebenem und abtastbaren Untergrund. Beispielsweise zur Höhensteuerung eines Schaufelbaggers auf einer Baustelle ist dieses Abtastverfahren aufgrund des benötigten langgestreckten Wagens ungeeignet.

Aus der DE 199 40 404 C2 ist ein Verfahren zum dreidimensionalen Steuern einer Baumaschine unter Verwendung eines GPS-Signals und eines verstellbaren Rotationslasers mit einem stationären Standort bekannt. Durch Empfangen des GPS-Signals werden die horizontalen Ortskoordinaten der sich bewegenden Baumaschine ermittelt, denen eine Sollhöhe eines Arbeitswerkzeugs der Baumaschine zugeordnet wird. Zur Erzeugung eines die Sollhöhe des Arbeitswerkzeugs angebenden Höhensignals wird der Rotationslaser entsprechend der zugeordneten Sollhöhe beispielsweise durch Neigen verstellt. Hierdurch ist es möglich, das Arbeitswerkzeug der Baumaschine abhängig vom Höhensignal präzise zu steuern. Zur Durchführung dieses Verfahrens müssen jedoch sowohl optische, als auch satellitengestützte Messverfahren zum Einsatz kommen. In Bereichen ohne Satellitenversorgung, beispielsweise in Tunnels, unter Brücken oder in Städten mit engen Strassenfluchten, ist dieses Verfahren aufgrund von Abschattungen nicht ausführbar. Zur Ermittlung der Ausrichtung der Arbeitsmaschine müssen weitere Messverfahren angewendet werden.

Die US 2003/0137658 A1 beschreibt ein System zum Steuern einer Baumaschine. Ein Rotationslaser emittiert mindestens zwei fächerförmige Laserstrahlen, die um eine Achse rotiert werden und in einer Ebene, die nicht von der Horizontalen gebildet wird, auseinanderlaufen. Die Neigung der mindestens zwei fächerförmigen Laserstrahlen ist unterschiedlich. Ein auf der Baumaschine montierter optischer Sensor dient zum Empfang der fächerförmigen Laserstrahlen. Die horizontale Positionsbestimmung erfolgt über einen ebenfalls auf der Baumaschine angeordneten GPS-Empfänger. Mittels einer arithmetischen Recheneinheit wird aus der Zeitverzögerung des Auftreffens der mindestens zwei fächerförmigen, vertikal auseinanderlaufenden Laserstrahlen auf den optischen Sensor ein Höhensignal gewonnen. Auch zur Durchführung dieses Verfahrens müssen sowohl optische, als auch satellitengestützte Messverfahren zum Einsatz kommen, um die Position sowohl horizontal als auch vertikal hinreichend genau zu ermitteln. Auch bei diesem Verfahren wird stets eine Satellitenversorgung vorausgesetzt. Zur Ermittlung der Ausrichtung müssen weitere Messverfahren zur Anwendung kommen.

In der US 3,687,566 wird ein Positionsbestimmungsverfahren und eine entsprechende Vorrichtung insbesondere zur Positionsbestimmung eines Schiffes, Flugzeugs etc. beschrieben. Hierbei wird ein fächerförmiger Strahl, insbesondere ein Laserstrahl, der in der Horizontalebene eng fokussiert und in der Vertikalebene stark divergent ist, um eine vertikale Achse rotiert, so dass der Strahl innerhalb eines grossen, sich vertikal erstreckenden Bereichs empfangen werden kann. Dem Strahl wird eine den Rotationswinkel wiedergebende Information aufgeprägt. Ein Objekt, dessen horizontale Position bestimmt werden soll, weist zwei beabstandete Empfänger auf, mittels welcher der Strahl empfangen und der Rotationswinkel erfasst werden kann. Aus der Kenntnis der jeweils empfangenen Rotationswinkel, des Abstands der beiden Empfänger und der Rotationsgeschwindigkeit wird die horizontale Position des Objekts bestimmt. Mittels des beschriebenen Verfahrens ist lediglich die Bestimmung der horizontalen Position möglich, nicht jedoch die Gewinnung einer präzisen Höheninformation. Ein ähnliches Verfahren wird in der DE 35 26 564 A1 gezeigt.

In der DE 31 07 674 A1 wird ein Verfahren zur Steuerung der Bewegung von Objekten mit Hilfe von umlaufenden, modulierten Laserstrahlen, die von einem oder mehreren an ortsfesten Bezugspunkten oder am Objekt befindlichen Sendern ausgestrahlt werden, beschrieben. Mit dem Laserstrahl werden der augenblickliche Einfallswinkel und die erwünschte Bewegungsbahn des Objekts übermittelt. Diese Informationen werden zur Bestimmung der Lage des Objekts und zur Berechnung der Kurskorrektur von einem am Objekt befindlichen Empfänger aufgenommen. Wird das Objekt nur auf einer Ebene bewegt, ist lediglich ein Rotieren des Laserstrahls in dieser Ebene erforderlich. Bei einer Führung des Objekts in drei Dimensionen wird ein umlaufendes, räumliches Strahlenfeld ausgesandt, wobei sich der Sender in um zwei Achsen dreht. In beiden Fällen wird der Sender schrittweise bewegt und in jeder Ruhestellung wird ein kurzdauernder, entsprechend den Informationen modulierter Laserstrahl ausgesandt. Der Laserstrahl dient somit als Übermittlungsmedium von Informationen, insbesondere Positionsdaten. Ein Nachteil des beschriebenen Verfahrens besteht im dem grossen Intervall der Informationsübermittlung, da zur Orientierung eines Objekts sowohl in der Horizontalen als auch in der Vertikalen ein grosser Bereich vom Laserstrahl dreidimensional abgescannt werden muss.

Aus der US 5,600,436 ist ein Positionsbestimmungssystem mit einer Referenzstation bekannt, die Rotationslasermittel zum Rotieren eines Laserstrahls oder zweier Laserstrahlen in eine Ebene um die Rotationsachse aufweist. Es wird beschrieben, dass der Laserstrahl in einer möglichen Ausführungsform mit einem Datensignal, das mit dem Emissionswinkel des Laserstrahls verknüpft ist, behaftet ist. Beispielsweise wird die Amplitude oder die Frequenz des Datensignals entsprechend moduliert. Mit einem Detektor ausgestattete Positionierungsmittel dienen zum Empfangen des rotierenden Laserstrahls und zum Erfassen des Emissionswinkels. Durch den Einsatz mehrerer Referenzstationen kann über Triangulation die horizontale Position der Positionierungsmittel bestimmt werden. Um ebenfalls die Höhe oder z-Koordinate erfassen zu können, werden Positionierungsmittel, die mit mehreren höhenversetzten Detektoren ausgestattet sind und das Signal einer dritten Referenzstation empfangen, beschrieben. Das geschilderte System erfordert eine Vielzahl an Referenzstationen. Mittels des beschriebenen Systems ist es nicht möglich, die Ausrichtung eines mit den Positionierungsmitteln ausgestatteten Objekts, beispielsweise einer mobile Arbeitsmaschine, zu ermitteln, so dass auf weitere Sensorik, insbesondere Magnetkompasssysteme zurückgegriffen werden muss. Die US 4,309,758 offenbart schließlich ein Flurförderzeug, das mittels eines rotierenden mit Winkelinformationen überlagerten Laserstrahls und mindestens zwei am Flurförderzeug angebrachten Detektoren eine Positionsermittlung desselben ermöglicht.

Eine der Erfindung zugrunde liegende Aufgabe besteht daher in der Schaffung eines effizienten, wirtschaftlichen Verfahrens zur genauen Bestimmung und/oder Steuerung der horizontalen Position und insbesondere der horizontalen Ausrichtung eines sich hochpräzise an einer Höhenreferenzfläche - insbesondere einer horizontalen Referenzebene - orientierenden Objekts, beispielsweise einer mobilen Arbeitsmaschine, unter Einsatz nur eines einzigen Messsystems.

Eine weitere Aufgabe der Erfindung besteht in der Schaffung eines zusätzlichen Messverfahrens und eines zusätzlichen Messsystems zur Ermittlung oder zur Genauigkeitserhöhung einer Lageinformation einer mobilen Arbeitsmaschine.

Diese Aufgaben werden durch die Verwirklichung der Merkmale des unabhängigen Verfahrensanspruchs gelöst.

Merkmale, die die Erfindung in alternativer oder vorteilhafter Weise weiterbilden, sind den abhängigen Ansprüchen zu entnehmen.

Bei dem Verfahren zum Ermitteln einer Lageinformation mindestens eines Objekts kommt gemäss der Erfindung ein Rotationslaser mit einer Rotationseinheit und einer Laserquelle zur Emission einer Laserstrahlung in eine rotierende Emissionsrichtung zum Einsatz. Die Laserstrahlung hat die Form eines Laserstrahlenbündels, das in vertikaler Richtung - also in Höhenrichtung - in seinem Verlauf nicht oder nur geringfügig auseinander- oder zusammenläuft und folglich in vertikaler Richtung eng gebündelt im Wesentlichen parallel verläuft. Somit ist es - wie aus dem Stand der Technik bekannt - möglich, eine hochpräzise Bezugsfläche oder Höhenreferenzfläche in vertikaler Richtung für das Objekt durch Erzeugung einer Quasilaserfläche zu definieren. Diese Quasilaserfläche kann durch eine ebene Quasilaserscheibe oder durch entsprechendes Steuern des Rotationslasers durch eine beliebige Kegelfläche geformt werden. Die vom Rotationslaser in die rotierende, horizontale Emissionsrichtung emittierte Laserstrahlung trägt eine winkelabhängige Information, aus welcher die Emissionsrichtung ableitbar ist, so dass die Emissionsrichtung mit der Richtung vom Rotationslaser zu dem Objekt, das die Laserstrahlung empfängt, verknüpft ist. Die Laserstrahlung kann auf unterschiedliche, im Folgenden genauer erläuterte Arten mit der winkelabhängigen Information behaftet werden. So ist es einerseits möglich, auf einer Trägerfrequenz der Laserstrahlung ein Signal aufzumodellieren, aus welchem die aktuelle Emissionsrichtung zum Emissionszeitpunkt der Laserstrahlung ableitbar ist. Ausserdem kann ein weiterer Strahlungsparameter der Laserstrahlung derart beeinflusst werden, dass die Emissionsrichtung durch entsprechendes Auswerten der Laserstrahlung beim Empfang ermittelbar ist. Dies kann beispielsweise durch emissionswinkelabhängiges Filtern, Polarisieren oder Intermittieren erfolgen.

Die von dem Rotationslaser ausgesandte, mit der winkelabhängigen Information behaftete Laserstrahlung wird von einem Detektor des Objekts empfangen. Aus der empfangenen Laserstrahlung wird die Emissionsrichtung aus der winkelabhängigen Information abgeleitet, so dass die Richtung vom Rotationslaser zum Objekt bestimmbar ist. Durch diese Richtungsinformation kann, gegebenenfalls mittels Durchführens weiterer Messungen - beispielsweise einer zusätzlichen optischen Distanzmessung zum Rotationslaser oder einer Detektionsrichtungserfassung - oder durch Empfang einer zweiten Laserstrahlung, die von einem zweiten Rotationslaser emittiert wird, die Lage - also die Ausrichtung und/oder Position - des Objekts in Bezug auf den mindestens einen Rotationslaser präzise bestimmt oder das Objekt in Bezug auf den mindestens einen Rotationslaser gesteuert werden. Es besteht keine zwangsläufige Notwendigkeit, dass neben dem Empfang der mindestens einen Laserstrahlung eine Kommunikation zwischen dem Objekt und einem dem mindestens einen Rotationslaser zugeordneten System stattfinden muss oder weitere Messsysteme neben dem Rotationslasersystem eingesetzt werden müssen. Somit ist es möglich, alleinig durch Empfang der von einem oder mehreren Rotationslasern emittierten Laserstrahlung - insbesondere durch Triangulation - sowohl die horizontale Position am Empfangsort in Bezug zu der Position des mindestens einen Rotationslasers, also auch die insbesondere azimutale Ausrichtung zu ermitteln. Selbstverständlich ist es jedoch möglich, das Verfahren gemeinsam mit Satellitenpositionsbestimmungsverfahren anzuwenden, beispielsweise um weitere Lageinformationen zu erhalten und gegebenenfalls über Datenredundanz die Genauigkeit und Zuverlässigkeit der Lagebestimmung zu erhöhen. Das beschriebene Verfahren eignet sich sowohl zur Bestimmung der Position von mobilen Arbeitsmaschinen, die beispielsweise im Strassenbau, bei Planierungsarbeiten, bei der Landerschliessung, im Tagebau, im Bergbau, in der Landwirtschaft oder in sonstigen Bereichen zum Einsatz kommen, als auch zur Positionsbestimmung von Strassenfahrzeugen, Transportsystemen, mobilen Handhabungssystemen, im Fertigungsbereich, im Baubereich oder für weitere Anwendungen, bei welchen Positionen eines Objekts relativ zu einem Bezugsort bestimmt werden sollen. Ein weiterer Vorteil des erfindungsgemässen Verfahrens besteht in der Kombination einer Referenzebenenerzeugung mit gleichzeitiger Lageinformationsübermittlung. Denn gemäss der Erfindung wird nicht nur, wie aus dem Stand der Technik - insbesondere aus der Rotationslasertechnik - bekannt, eine Referenzebene erzeugt, an welcher ein hochgenaues senkrechtes Ausrichten zu dieser Referenzebene möglich ist, sondern auch gleichzeitig eine Lageinformation in Form der Emissionsrichtung der Laserstrahlung durch die Laserstrahlung selbst übermittelt, so dass eine Orientierung innerhalb dieser Ebene möglich ist. Daher eignet sich das erfindungsgemässe Verfahren insbesondere zur Positionsbestimmung von Planier- oder Strassenbaumaschinen, da in diesen Anwendungsbereichen die Genauigkeit der Höheninformation, die oft unter zwei Zentimetern betragen muss, von besonderer Bedeutung ist. Mit dem erfindungsgemässen Verfahren ist es möglich, die in zahlreichen Bereichen ohnehin stattfindende Ausrichtung gegenüber einer Referenzebene, die von einem Rotationslaser erzeugt wird, mit einer gleichzeitigen Bestimmung der Lage, insbesondere der Ausrichtung und/oder der Position, am Empfangsort der Laserstrahlung zu verbinden. Somit kann gegebenenfalls auf weitere Messsysteme wie GPS, Magnetkompass- oder Gyrosysteme verzichtet werden. Selbstverständlich ist es ebenfalls realisierbar, eine divergente Laserstrahlung, die z.B. eine Kegel- oder Flachform aufweist, in eine rotierende Emissionsrichtung auszusenden, so dass keine ebene Quasireferenzfläche mit konstanter Quasiflächendicke erzeugt wird. Dies ist beispielsweise sinnvoll, wenn innerhalb eines grossen Bereichs parallel zur Rotationsachse des Rotationslasers ein Empfang der emittierten Laserstrahlung und somit der Emissionsrichtung möglich sein soll.

Im Rahmen der Erfindung ist unter der vertikalen Richtung oder der Höhe die Senkrechte zu der vom Rotationslaser aufgespannten Fläche - insbesondere Ebene - oder die Richtung der Rotationsachse und folglich unter der horizontalen Position die zweidimensionale Position innerhalb dieser Fläche oder Ebene zu verstehen. Hingegen bezieht sich die Horizontale und Vertikale nicht zwangsläufig auf das gravitationsorientierte, absolute Erdkoordinatensystem, auch wenn dies in der Praxis meist der Fall sein mag.

Der Rotationslaser zur Emission einer Laserstrahlung in eine rotierende Emissionsrichtung weist eine Laserquelle zur Erzeugung der Laserstrahlung und eine Rotationseinheit zur Erzeugung einer Rotationsbewegung auf. Die Rotationseinheit steht in einer derart ausgebildeten Wirkverbindung mit der Laserquelle, dass die Emission der Laserstrahlung in die rotierende Emissionsrichtung erfolgt, wodurch eine Quasilaserfläche, die als eine ebene Quasilaserscheibe oder durch entsprechendes Steuern des Rotationslasers als eine beliebige Kegelfläche ausgebildet sein kann, erzeugt wird. Die Emission erfolgt hierbei kontinuierlich um 360° oder beschränkt auf mindestens ein Segment. So ist es möglich, die Emission auf Teilbereiche zu beschränken, beispielsweise mittels einer Blende, durch Abschalten der Laserquelle innerhalb eines gewissen Emissionswinkelbereichs oder durch gezieltes Ansteuern der Rotationseinheit, beispielsweise durch Fächern der Laserstrahlung innerhalb eines Winkelbereichs. Eine derartige Beschränkung der Emission auf einen Teilbereich kann insbesondere dann erfolgen, wenn sich die Bewegungsfreiheit des empfangenden Objekts auf ein Teilsegment der möglichen Quasilaserfläche beschränkt. Daher ist unter Rotation im Rahmen dieser Erfindung nicht zwangsweise eine kontinuierliche Rotation um eine Achse zu verstehen, sondern gegebenenfalls auch das fächerartige Schwenken der Laserstrahlung in einem Emissionswinkelbereich. Der erfindungsgemässe Rotationslaser umfasst Mittel zum Behaften mindestens eines Strahlungsparameters der Laserstrahlung mit einer winkelabhängigen Information, aus welcher die Emissionsrichtung ableitbar ist. Aus der winkelabhängigen Information ist die Emissionsrichtung in einer möglichen Ausführungsform innerhalb des gesamten Emissionswinkelbereichs eindeutig ableitbar. In einer alternativen Ausführungsform ist diese eindeutige Ableitbarkeit lediglich auf mehrere Teilbereiche des gesamten Emissionswinkelbereichs beschränkt, beispielsweise auf 0 bis 180° und 180° bis 360°, so dass zwar innerhalb dieser Bereiche jeweils eine eindeutige Zuordnung einer Emissionsrichtung möglich ist, jedoch der Bereich selbst nicht zwangsläufig direkt ermittelbar ist. Dies ist insbesondere bei Anwendungen, bei welchen sich das Objekt nur in einem der mehreren Teilbereiche bewegt, unkritisch. Durch eine derartige Aufteilung in mehrere Emissionswinkelbereiche kann beispielsweise die Bestimmungsgenauigkeit der Emissionsrichtung erhöht werden. Die Mittel zum Behaften des mindestens einen Strahlungsparameters können erfindungsgemäss beispielsweise von einem die rotierende Laserstrahlung umgebenden ringförmigen optischen Filter oder Polarisator gebildet werden, von einem im Strahlengang befindlichen optischen Element oder von einer der Laserquelle zugeordneten Schaltung und Emissionsrichtungs-Erfassungsmitteln. Im letzteren Fall wird über die Emissionsrichtungs-Erfassungsmittel, die z.B. als ein mit der Rotationseinheit in Wirkverbindung stehender Winkeldetektor ausgebildet sind, die Emissionsrichtung erfasst und über die Schaltung mindestens ein Strahlungsparameter bei der Erzeugung der Laserstrahlung durch die Laserquelle mit der winkelabhängigen Information behaftet. Dies erfolgt beispielsweise durch Aufmodulieren eines Signals auf eine Trägerfrequenz der Laserstrahlung. Alternativ findet die Informationsbehaftung erst nach der Erzeugung der Laserstrahlung beispielsweise mittels einem aktivem Modulator, z.B. einem elektrooptischen Modulator (EOM) oder akustooptischen Modulator (AOM), statt. Als elektrooptischer Modulator eignet sich beispielsweise eine Pockelszelle. Weitere EOM's oder AOM's sind aus dem Stand der Technik bekannt.

Das erfindungsgemässe Verfahren wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: in einer schematischen Darstellung eine Baumaschine, die eine Lageinformation durch über einen ersten Detektor erfolgendes Empfangen einer von einem Rotationslaser ausgesendeten Laserstrahlung erhält;
- Fig. 2: eine Prinzipdarstellung des Ableitens der Richtung vom Rotationslaser zu der Baumaschine durch Ableiten einer ersten Emissionsrichtung der Laserstrahlung;
- Fig. 3: eine Prinzipdarstellung des Ableitens der Position der Baumaschine durch zusätzliches Ermitteln der Entfernung;
- Fig. 4: eine Prinzipdarstellung des Ableitens der Ausrichtung der Baumaschine durch zusätzliches Ermitteln einer ersten Detektionsrichtung;
- Fig. 5: eine Prinzipdarstellung des Ableitens der Entfernung oder Position der Baumaschine durch zusätzliches Ableiten einer zweiten Emissionsrichtung mittels eines zweiten Detektors;
- Fig. 6: eine Prinzipdarstellung des Ableitens der Entfernung oder Position der Baumaschine durch erfindungsgemäßes definiertes Verändern der Position des ersten Detektors und zusätzliches Ableiten einer zweiten Emissionsrichtung;
- Fig. 7: eine Prinzipdarstellung des Ableitens der Entfernung oder Position der Baumaschine durch definiertes Verändern der Position des ersten Detektors durch Rotation desselbigen;
- Fig. 8: in einer schematischen Darstellung die Anordnung eines rotierenden Detektors mit zwei diametralen Detektionsbereichen;
- Fig. 9: eine Prinzipdarstellung des Ableitens der Entfernung oder Position der Baumaschine durch Ableiten einer zweiten Emissionsrichtung einer Laserstrahlung eines zweiten Rotationslasers;
- Fig. 10: eine schematische Darstellung eines Rotationslasers mit einer Schaltung zur Behaftung eines Strahlungsparameters mit einer winkelabhängigen Information;
- Fig. 11: eine Draufsicht auf einen Rotationslaser mit einem ringförmigen optischen Filter oder Polarisator mit entlang seines Ringumfangs kontinuierlich unterschiedlichen optischen Eigenschaften; und
- Fig. 12: eine Schrägansicht auf einen ringförmigen Strichcodeträger zum Intermittieren der Laserstrahlung in Abhängigkeit von der Emissionsrichtung.

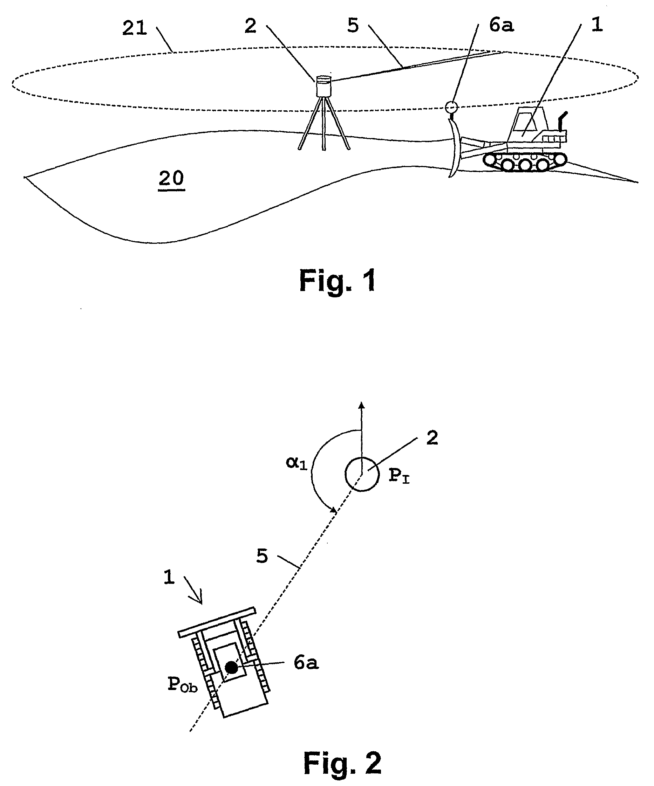

Fig. 1 zeigt eine Baustelle 20, auf der an einem Referenzpunkt ein in Bezug auf ein übergeordnetes Koordinatensystem präzise ausgerichteter Rotationslaser 2 zur Erzeugung einer rotierenden Laserstrahlung 5 aufgestellt ist. Durch die Rotation der Laserstrahlung 5 wird eine Quasilaserebene 21 erzeugt, die als eine Höhenreferenz für die Baustelle 20 dient. Ein Objekt in Form einer Baumaschine 1 auf der Baustelle 20 empfängt mittels eines Detektors 6a kurzzeitig die Laserstrahlung 5, sobald diese über den Detektor 6a streift, sofern sich der Detektor 6a innerhalb der durch die rotierende Laserstrahlung 5 gebildeten Quasilaserebene 21 befindet. Da im gezeigten Beispiel die Laserstrahlung 5 eine vernachlässigbar geringe Divergenz in vertikaler Richtung aufweist, also der Strahlenverlauf in vertikaler Richtung im Wesentlichen parallel ist, ist es möglich, die Baumaschine 1 - insbesondere ein Werkzeug der Baumaschine 1, wie beispielsweise eine Schaufel - in Form eines hochpräzisen Höhenorientierens zumindest einer Komponente der Baumaschine 1 an der Laserstrahlung 5 exakt in Bezug auf die Referenzhöhe auszurichten. Dieses Verfahren ist aus dem Stand der Technik bekannt. Der Detektor 6a verfügt in einer möglichen Ausführungsform über einen in zur Quasilaserebene 21 senkrechten Richtung langgestreckten Detektionsbereich, innerhalb dessen ein Auftreffen der Laserstrahlung 5 auf den Detektor 6a erfasst werden kann, so dass Abweichungen von der Referenzhöhe genau detektiert werden können. Gegebenenfalls ist der Detektor 6a in senkrechter Richtung automatisch höhenverstellbar, um selbst bei grösseren Höhendifferenzen die Quasilaserebenen nicht verlassen zu müssen und die Höhenreferenz nicht zu verlieren.

In Fig. 2 wird in einer Prinzipdarstellung eine mögliche Ausführungsform eines vergleichs-Verfahrens erläutert. Ein Rotationslaser 2, der in der Position P_{I} positioniert ist, sendet eine Laserstrahlung 5 in eine rotierende Emissionsrichtung α₁. In der Darstellung weist die Rotationsachse des Rotationslasers 2 zum Zenit. Die Emission findet in einer horizontalen Ebene statt. Die Rotation erfolgt in der Draufsicht entgegen dem Uhrzeigersinn in die somit zwischen 0° und 360° rotierende Emissionsrichtung α₁. Die Laserstrahlung 5 trägt eine winkelabhängige Information, aus welcher die jeweilige Emissionsrichtung α₁ ableitbar ist, wobei die Informationsbehaftung der Laserstrahlung z.B. durch ein Aufmodellieren eines Signals auf eine Trägerfrequenz der Laserstrahlung erfolgt. Im Empfangsbereich der Laserstrahlung 5 befindet sich in einer Position P_{ob} ein Objekt in Form einer Baumaschine 1. Die vom Rotationslaser 2 ausgesendete Laserstrahlung 5 wird von einem Detektor 6a, der auf der Baumaschine 1 angeordnet ist, empfangen. Der Detektor 6a ist derart ausgestaltet, dass die winkelabhängige Information aus der Laserstrahlung 5 empfangen und derart verarbeitet wird, dass hieraus die erste Emissionsrichtung α₁ abgeleitet wird. Aus der Kenntnis der Ausrichtung des Rotationslasers 2 in Bezug auf ein übergeordnetes Koordinatensystem ist somit in der Position P_{ob} die Richtung vom Rotationslaser 2 zur Baumaschine 1 bestimmbar, ohne dass neben dem reinen Empfang der Laserstrahlung 5 eine Kommunikation zwischen P_{I} und P_{ob} stattfinden muss.

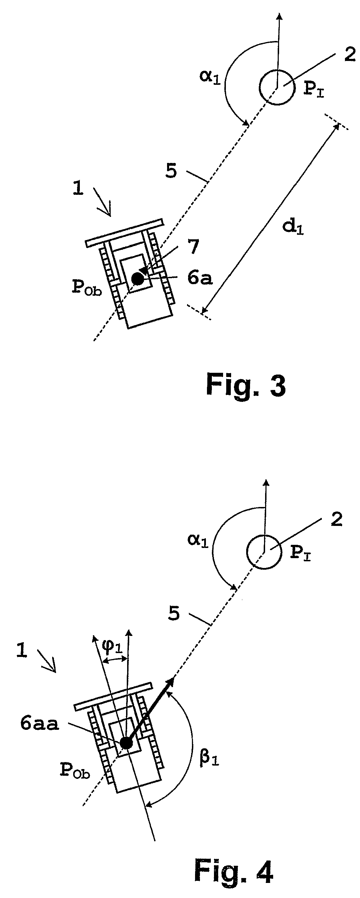

Um die Position P_{ob} der Baumaschine 1 relativ zu der Position P_{I} des Rotationslasers 2 bestimmen zu können, wird in einer Fortführung des in Fig. 2 erläuterten Verfahrens, wie in Fig. 3 dargestellt, weiters die Entfernung d₁ zwischen dem Detektor 6a und dem Rotationslaser 2 ermittelt. Die Entfernungsmessung erfolgt im gezeigten Beispiel mittels eines nahe dem Detektor 6a angeordneten Laserentfernungsmessers 7 auf der Baumaschine 1. Der Laserentfernungsmesser 7 misst automatisch einen am Rotationslaser 2 befindlichen Punkt an, wodurch die Entfernung d₁ ermittelt wird. Aus der Kenntnis der Emissionsrichtung α₁ und der Entfernung d₁ zwischen dem Detektor 6a und dem Rotationslaser 2 ist es nun möglich, die Position P_{ob} der Baumaschine 1 relativ zu der Position P_{I} des Rotationslaser 2, insbesondere durch Transformation der Polarkoordinaten α₁ und d₁ in kartesische Koordinaten, abzuleiten. Selbstverständlich ist es sowohl möglich, lediglich die relative Position der Baumaschine 1 zum Rotationslaser 2 zu bestimmen, als auch aus der Kenntnis dieser relativen Position der Baumaschine 1 und der absoluten Position P_{I} des Rotationslasers 2 auf die absolute Position P_{Ob} der Baumaschine zu schliessen. Gleiches gilt für die Ausrichtung der Baumaschine 1.

Fig. 4 erläutert in einer Prinzipdarstellung das Ableiten der Ausrichtung der Baumaschine 1. Wie in Fig. 2 sendet der Rotationslaser 2, der in der Position P_{I} positioniert ist, die Laserstrahlung 5 in eine rotierende Emissionsrichtung α₁ aus, die von einem an der Baumaschine 1 angeordneten Detektor 6aa empfangen wird. Der Detektor 6aa verfügt jedoch im Vergleich zu dem Detektor 6a aus Fig. 2 über eine erweiterte Funktionalität, die neben dem Ableiten der Emissionsrichtung α₁ ebenfalls ein Ermitteln der Detektionsrichtung β₁, von welcher die Laserstrahlung 5 auf den Detektor 6aa relativ zu der Ausrichtung der Baumaschine 1 trifft, ermöglicht. Derartige Rundumdetektoren zum Empfang einer Laserstrahlung mit einem Empfangsbereich von 0° bis 360° und einer Empfangswinkeldetektion sind aus dem Stand der Technik bekannt. Aus der Kenntnis der Emissionsrichtung α₁ und der Detektionsrichtung β₁ ist mittels Subtraktion die Ausrichtung ϕ₁ der Baumaschine 1 relativ zu der Ausrichtung des Rotationslasers 2 ableitbar. Somit ist es möglich, die azimutale Ausrichtung der Baumaschine 1 ohne den Einsatz von Magnetkompass- oder Gyrosystemen über den Rotationslaser 2 zu bestimmen.

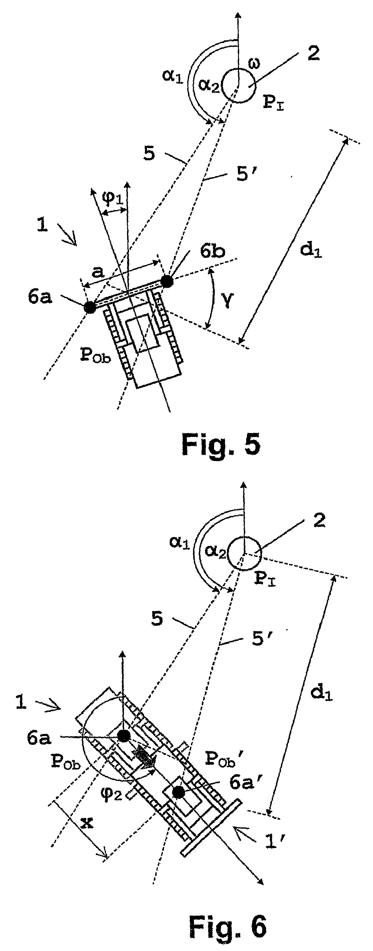

Während bei dem in Fig. 3 dargestellten Verfahren neben dem Empfangen der vom Rotationslaser 2 ausgesendeten Laserstrahlung 5 auch eine Distanzmessung mittels eines gesonderten Laserentfernungsmesser 7 erfolgt, zeigen Fig. 5, 6 und 7 Verfahren, mittels welchen alleinig durch Empfangen der von dem Rotationslaser 2 ausgesendeten, mit der winkelabhängigen Information behafteten Laserstrahlung 5 die Position P_{ob} und/oder Entfernung der Baumaschine 1 relativ zu der Position P_{I} des Rotationslasers 2 auf trigonometrischem Wege durch mehrfaches Empfangen der Laserstrahlung an unterschiedlichen Orten abgeleitet wird.

Erfindungsgemäss erfolgt hier ein zweites Empfangen der Laserstrahlung 5' am Objekt 1, 1' in einer gegenüber der Position beim ersten Empfangen der Laserstrahlung 5 definiert horizontal beabstandeten Position. Die erste Emissionsrichtung α₁ der vom ersten Detektor 6a beim ersten Empfangen empfangenen Laserstrahlung 5 und/oder die zweiten Emissionsrichtung α₂ der beim zweiten Empfangen empfangenen Laserstrahlung 5' werden aus der winkelabhängigen Information abgeleitet. Die Entfernung d₁ oder die horizontale Position P_{Ob}, P_{Ob'} des Objekts 1, 1' relativ zu der Position P_{I} des Rotationslasers 2 ergeben sich aus der Kenntnis der ersten Emissionsrichtung α₁, der zweiten Emissionsrichtung α₂ und des Positionsunterschieds bzw. der relativen Positionsdifferenz beim zweiten Empfangen zum ersten Empfangen. Dieses Verfahren wird im Folgenden in den Fig. 5 bis 7 detaillierter beschrieben.

Fig. 5 zeigt einen in der Position P_{I} platzierten Rotationslaser 2, der eine Laserstrahlung 5, 5' in eine rotierende Emissionsrichtung α₁, α₂ mit einer Rotationsgeschwindigkeit ω aussendet. Die Laserstrahlung 5, 5' trägt eine winkelabhängige Information, aus der die zum Zeitpunkt des Aussendens aktuelle Emissionsrichtung α₁, α₂ ableitbar ist. Die Rotation der Laserstrahlung 5, 5' erfolgt, wie oben, um eine in Richtung des Zenits weisende Rotationsachse von oben betrachtet im Uhrzeigersinn. Auf einer Baumaschine 1 in der Position P_{ob} im Empfangsbereich der Laserstrahlung 5, 5' sind ein erster Detektor 6a und ein zweiter Detektor 6b angeordnet. Die Detektoren 6a und 6b haben zueinander einen bekannten Detektorenabstand a. Die Höhe der beiden Detektoren 6a und 6b ist derart, dass beide Detektoren im Empfangsbereich der Laserstrahlung 5, 5' liegen. Bevorzugt befinden sich die Detektoren 6a und 6b auf gleicher Höhe, was jedoch im Falle einer vertikalen Divergenz der Laserstrahlung 5, 5' nicht zwangsläufig notwendig ist. Ebenfalls bekannt ist die Detektorenausrichtung γ relativ zum Rotationslaser 2, die mit der Ausrichtung ϕ₁ der Baumaschine 1 verknüpft ist. Die Ausrichtung ϕ₁ ergibt sich beispielsweise aus einer Empfangswinkeldetektion, wie in Fig. 4 erläutert, oder aus einer Messung mittels eines Magnetkompass- oder Gyrosystems. Somit ist der Positionsunterschied bzw. die relative Positionsdifferenz zwischen dem ersten Detektor 6a und dem zweiten Detektor 6b bekannt. Innerhalb einer Umdrehung des Rotationslasers 2 überstreift die Laserstrahlung 5, 5' im gezeigten Beispiel zunächst den ersten Detektor 6a und kurz danach den zweiten Detektor 6b. Zunächst empfängt der erste Detektor 6a die von dem Rotationslaser 2 ausgesendete Laserstrahlung 5, aus welcher eine erste Emissionsrichtung α₁ aus der winkelabhängigen Information ableitbar ist. Kurz danach trifft die durch die Rotation weiterbewegte Laserstrahlung 5' auf den zweiten Detektor 6b, so dass aus der winkelabhängigen Information eine zweite Emissionsrichtung α₂ abgeleitet werden kann. Aus der Kenntnis der Ausrichtung ϕ₁ der Baumaschine 1 und somit der Detektorenausrichtung γ relativ zum Rotationslaser 2, und des Detektorenabstand a sind über trigonometrischen Grundbeziehungen die senkrechte Projektion des Detektorenabstand a zum Rotationslaser 2 und unter Heranziehung der Differenz zwischen der ersten Emissionsrichtung α₁ und der zweiten Emissionsrichtung α₂ die Entfernung d₁ zwischen der Baumaschine 1 und der Position P_{I} des Rotationslasers 2 ableitbar. Aus der Kenntnis der Entfernung d₁ und dem Mittelwert der ersten Emissionsrichtung α₁ und der zweiten Emissionsrichtung α₂ ist ebenfalls die Position P_{ob} der Baumaschine 1 relativ zu der Position P_{I} des Rotationslasers 2 ermittelbar.

Im in Fig. 5 aufgeführten Beispiel werden sowohl die erste Emissionsrichtung α₁, als auch die zweite Emissionsrichtung α₂ aus der winkelabhängigen Information der Laserstrahlung 5, 5' abgeleitet. Es ist jedoch ebenfalls möglich, nur die erste Emissionsrichtung α₁ aus der winkelabhängigen Information zu gewinnen und die zweite Emissionsrichtung α₂ aus durch Ermitteln einer Zeitdifferenz Δt zwischen dem Empfangen der Laserstrahlung 5 durch den ersten Detektor 6a und dem Empfangen der Laserstrahlung 5' durch den zweiten Detektor 6b, oder umgekehrt, und aus der Kenntnis der Rotationsgeschwindigkeit ω der Laserstrahlung und der ersten Emissionsrichtung α₁ abzuleiten. Da im Rahmen dieses Verfahrens nur einer der beiden Detektoren 6a oder 6b mit Mitteln zum Ableiten der Emissionsrichtung α₁ bzw. α₂ ausgestattet sein muss, können Kosteneinsparungen erzielt werden.

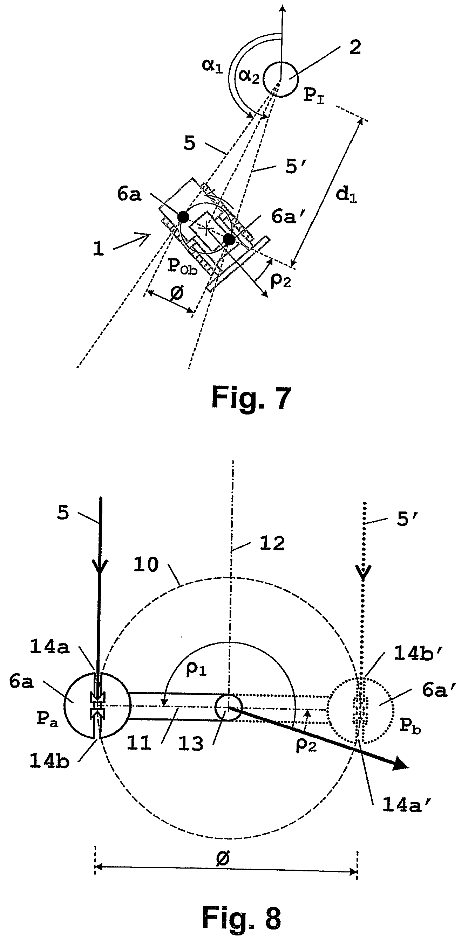

Bei dem in Fig. 5 erläuterten Vergleichs-Verfahren kommen zwei beabstandete Detektoren 6a, 6b zum Einsatz. Erfindungsgemäß und gemäss dem oben erläuterten Verfahrenprinzip ist es jedoch möglich anstelle von zwei beabstandeten Detektoren nur einen einzigen Detektor einzusetzen, dessen Position definiert zwischen zwei Empfangszeitpunkten verändert wird. Zwei derartige Verfahren zeigen Fig. 6 und Fig. 7. Bei beiden Verfahren erfolgt nach einem ersten Empfangen der Laserstrahlung und einem Ableiten der ersten Emissionsrichtung α₁ ein definiertes Verändern der Position des Detektors 6a der Baumaschine 1 gegenüber seiner Position beim ersten Empfangen der Laserstrahlung 5 in eine veränderte Position. Anschliessend wird durch denselben Detektor 6a' die Laserstrahlung 5' ein zweites Mal empfangen, so dass eine zweite Emissionsrichtung α₂ der vom Detektor 6a' beim zweiten Empfangen empfangenen Laserstrahlung 5' - insbesondere aus der winkelabhängigen Information - möglich ist. Somit ist die Entfernung d₁ oder Position P_{ob} der Baumaschine 1 relativ zu der Position P_{I} des Rotationslaser 2 aus der Kenntnis der ersten Emissionsrichtung α₁, der zweiten Emissionsrichtung α₂ und des definierten Verändern der Position des Detektors zwischen dem ersten Empfangen und dem zweiten Empfangen ableitbar.

In Fig. 6 wird, wie im Ausführungsbeispiel aus Fig. 5, von einem in der Position P_{I} platzierten Rotationslaser 2 eine Laserstrahlung 5, 5' in eine rotierende Emissionsrichtung ausgesendet. In der Position P_{ob} einer Baumaschine 1 mit einem einzigen Detektor 6a erfolgt ein erstes Empfangen der Laserstrahlung 5 und ein erstes Ableiten einer ersten Emissionsrichtung α₁. Im Anschluss wird die Position des Detektors 6a der Baumaschine 1 gegenüber seiner Position beim ersten Empfangen der Laserstrahlung 5 geändert, indem die gesamte Baumaschine 1, 1' um einen bekannten Weg x in eine bekannte Richtung ϕ₂ relativ zum Rotationslaser 2 bei gegenüber der Baumaschine 1, 1' fixer Position des Detektors 6a, 6a' bewegt wird. In Fig. 6 wird in der ursprünglichen Position P_{ob} die Baumaschine 1 mit ihrem Detektor 6a schattiert dargestellt, während in der veränderten Position P_{ob}' die Baumaschine 1' mit ihrem Detektor 6a' schwarz dargestellt ist. In der veränderten Position P_{ob}' der Baumaschine 1' wird die Laserstrahlung 5' ein zweites Mal empfangen und aus der winkelabhängigen Information eine zweite Emissionsrichtung α₂ erfasst. Aus der Kenntnis des Wegs x und dessen Richtung ϕ₂ wird trigonometrisch die senkrechte Projektion des Wegs x in Bezug auf die Richtung zum Rotationslaser 2 ermittelt und hieraus, ebenfalls unter Heranziehen trigonometrischer Grundbeziehungen, die Entfernung d₁ oder Position P_{ob}' der Baumaschine 1' relativ zu der Position P_{I} des Rotationslaser 2 abgeleitet.

Ein Nachteil der in Fig. 5 und Fig. 6 erläuterten Verfahren besteht darin, dass nicht in jeder Ausrichtung der Baumaschine 1 die Position ermittelbar ist. Steht im Ausführungsbeispiel von Fig. 5 die Baumaschine 1 quer zur Empfangsrichtung der Laserstrahlung 5, 5', so detektieren beiden Sensoren 6a und 6b zur gleichen Zeit das Auftreffen der Laserstrahlung, so dass trigonometrisch weder die Distanz d₁, noch die Position P_{Ob} ableitbar ist. Nämliche Problematik besteht im Ausführungsbeispiel von Fig. 6 bei einer Ausrichtung der Baumaschine 1 in Richtung oder in entgegengesetzter Richtung der Laserstrahlung 5, 5'. Zudem ist bei stillstehendem Fahrzeug das Verfahren von Fig. 6 nicht zur Distanz- oder Positionsbestimmung anwendbar.

Diese Probleme löst das in Fig. 7 dargestellte Ausführungsbeispiel durch ein definiertes Bewegen eines einzigen Detektors 6a, 6a' bei im Wesentlichen fixer Position P_{ob} einer Baumaschine 1. Fig. 8 zeigt in einer Detailansicht aus Fig. 7 die Anordnung eines rotierenden Detektors 6a auf der Baumaschine 1. Der Detektor 6a kreist um eine im Wesentlichen zu der Rotationsachse des Rotationslasers 2 parallele Achse auf einer Kreisbahn 10. Der kreisende Detektor 6a weist zwei diametrale Detektionsbereiche 14a, 14b auf, die ein Empfangen im Wesentlichen nur derjenigen Laserstrahlung 5, 5' ermöglichen, die tangential zu der Kreisbahn 10 verläuft. Ein derartiger Detektor ist beispielsweise realisierbar, indem der Detektionsbereich auf einen Auftreffwinkel von exakt 0° und 180° auf den Detektor beschränkt ist. Im Rahmen einer vollen Umdrehung des Detektors 6a empfängt der Detektor 6a zunächst in der Position Pₐ - in Fig. 8 mittels durchgezogener Linie dargestellt - in der Stellung ρ₁ auf der Kreisbahn 10 die unter dem Emissionswinkel α₁ ausgesendete Laserstrahlung 5 im Detektionsbereich 14a der beiden diametralen Detektionsbereich 14a und 14b. Nach etwa einer halben weiteren Umdrehung des Detektors 6a, 6a' kommt es im Wesentlichen diametral gegenüber der ersten Position Pₐ in der Position P_{b} in der Stellung ρ₂ - in Fig. 8 mittels unterbrochener Linien dargestellt - zu einem zweiten Empfangen der mit dem Emissionswinkel α₂ ausgesendeten Laserstrahlung 5' im Detektionsbereich 14b' der beiden diametralen Detektionsbereich 14a' und 14b'. Die Verbindungslinie 11 der zwei im Wesentlichen diametralen Positionen Pₐ, P_{b} verläuft hierbei senkrecht zu der Verbindungslinie 12 zwischen dem Rotationslaser 2 und dem auf der zu der parallelen Achse liegenden Kreisbahnzentrum 13. Die Entfernung d₁ oder Position P_{ob} der Baumaschine und gegebenenfalls die Ausrichtung ϕ₂ der Baumaschine 1 relativ zum Rotationslaser 2 ist aus der Kenntnis der ersten Emissionsrichtung α₁, der zweiten Emissionsrichtung α₂, dem Durchmesser Ø der Kreisbahn 10 und insbesondere der Detektionszeitpunkte und/oder der Positionen ρ₁, ρ₂ des Detektors 6a, 6a' beim ersten und zweiten Empfangen auf trigonometrischem Wege ableitbar. Die Positionen ρ₁, ρ₂ des Detektors 6a, 6a' sind beispielsweise über einen Winkeldetektor erfassbar. Bei konstanter Rotationsgeschwindigkeit ist es in bekannter Weise alternativ möglich, die Positionen ρ₁, ρ₂ des Detektors 6a, 6a' aus den jeweiligen Detektionszeitpunkten zu ermitteln.

Ebenfalls besteht die Möglichkeit, drei insbesondere in den Ecken eines horizontal liegenden, gleichschenkligen Dreiecks fix auf dem Fahrzeug angeordnete Detektoren zu verwenden, um zu vermeiden, dass bei bestimmten Stellungen des Fahrzeugs eine trigonometrische Ermittlung der Position nicht möglich ist. Durch die Dreiecksanordnung befinden sich immer mindestens zwei nicht fluchtende Detektoren im Sichtbereich des Rotationslasers.

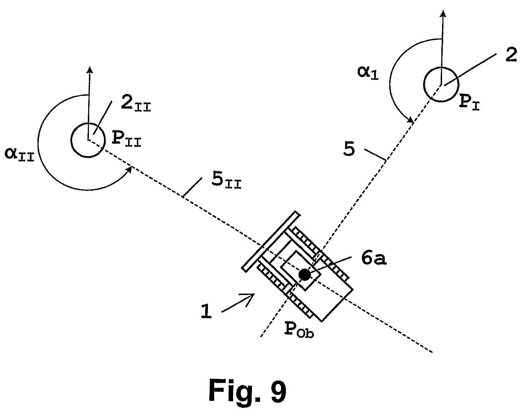

Während in den obigen Ausführungsbeispielen stets ein einziger Rotationslaser zum Einsatz kommt, wird in Fig. 9 ein Verfahren mit zwei beabstandeten Rotationslasern beschrieben. Ein erster Rotationslaser 2 in der Position P_{I} und ein weiterer Rotationslaser 2_{II} in der Position P_{II} senden beide jeweils eine Laserstrahlung 5 bzw. 5_{II} in eine rotierende Emissionsrichtung α₁ bzw. α₂ aus. Beide Laserstrahlungen 5 und 5_{II} tragen jeweils eine winkelabhängige Information, aus welcher die Emissionsrichtung α₁ bzw. α₂ ableitbar ist, so dass die Emissionsrichtung α₁ bzw. α₂ mit den beiden Richtungen von den Rotationslasern 2 bzw. 2_{II} zu einem die Laserstrahlungen 5 und 5_{II} empfangenden Objekt, im gezeigten Beispiel eine Baumaschine 1, verknüpft sind. Die in der Position P_{ob} befindliche Baumaschine 1 verfügt über einen Detektor 6a zum Empfang der Laserstrahlungen 5 und 5_{II} und zum Ableiten der Emissionsrichtung α₁ bzw. α_{II}. Das Behaften der Laserstrahlung mit der winkelabhängigen Information erfolgt beispielsweise durch Aufmodellieren von Signalen auf eine Trägerfrequenz, wobei sich beispielsweise die beiden Trägerfrequenzen oder die aufmodellierten Signale der beiden Rotationslaser 2 und 2_{II} derart unterscheiden, dass die beiden Laserstrahlungen 5 und 5_{II} vom Detektor 6a den jeweiligen Rotationslasers 2 bzw. 2_{II} zugeordnet werden können. Aus der Kenntnis der ersten Emissionsrichtung α₁, der weiteren Emissionsrichtung α_{II} und der Positionen P_{I} und P_{II} der beiden Rotationslaser 2 bzw. 2_{II} erfolgt auf trigonometrischem Wege das Ableiten der Position P_{ob} der Baumaschine relativ zu den beiden Rotationslasern 2 und 2_{II}. Die beiden Rotationslaser 2 und 2_{II} sind derart ausgebildet und ausgerichtet, dass die jeweiligen Laserstrahlungen 5 bzw. 5_{II} von dem einen Detektor 6a empfangbar sind. Bevorzugt bilden beide rotierende Laserstrahlungen 5 bzw. 5_{II} eine gemeinsame Quasilaserebene als Höhenreferenz. Alternativ ist es unter Verzicht der Höhenreferenz möglich, unterschiedlich ausgerichtete Rotationslasern 2 und 2_{II} zu verwenden, deren vertikal stark divergierende Laserstrahlungen 5 bzw. 5_{II} von einem Detektor 6a empfangen werden. Selbstverständlich ist es möglich, die oben beschriebenen Verfahrensvarianten mit dieser Verfahrensvariante, bei welcher zwei Rotationslaser eingesetzt werden, zu kombinieren, um Empfangsausfälle durch Abschattungen zu vermeiden und die Positionsbestimmungsgenauigkeit zu erhöhen.

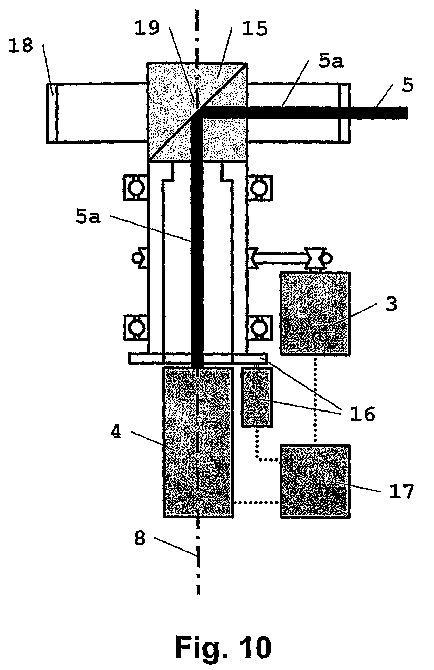

Fig. 10 zeigt einen Rotationslaser mit einer Schaltung zur Behaftung eines Strahlungsparameters mit einer winkelabhängigen Information in einer schematischen Darstellung. Der Rotationslaser zur Emission einer Laserstrahlung in eine rotierende Emissionsrichtung umfasst eine Laserquelle 4 zur Erzeugung der Laserstrahlung 5a. Unterschiedlichste Ausführungsformen von Laserquellen, insbesondere Diodenlaser, sind aus dem Stand der Technik bekannt. Die Laserstrahlung 5a trifft in ihrem Strahlengang auf eine Laserstrahlungsumlenkeinheit 15, die den Laserstrahl 5a im gezeigten Beispiel um 90° umlenkt. Die Laserstrahlungsumlenkeinheit 15 ist beispielsweise als ein um 45° zur Laserstrahlung 5a verkippter Spiegel, vorzugsweise jedoch als ein Pentaspiegel, der unabhängig vom Einfallswinkel stets die Laserstrahlung 5a um 90° umlenkt, ausgebildet. Die Laserstrahlungsumlenkeinheit 15 steht in einer derartigen Winkverbindung mit einer Rotationseinheit 3, so dass die Laserstrahlungsumlenkeinheit 15 um eine Rotationsachse 8 motorisch antreibbar rotiert. Die Rotationseinheit 3 ist beispielsweise als eine kugelgelagerte, den Strahlengang der Laserstrahlung 5a umgebende Hülse, die über einen Riemenantrieb von einem Elektromotor angetrieben wird, ausgebildet. Somit erfolgt die Emission einer Laserstrahlung 5, 5a in eine rotierende Emissionsrichtung α, so dass die in Fig. 1 dargestellte Quasilaserebene 21 erzeugt wird. Als Rotationszentrum 19 wird der Schnittpunkt dieser Quasilaserebene 21 mit der Rotationsachse 8 definiert. Das Rotationszentrum 19 wird von einem transparenten Austrittsfenster 18 derart umgeben, dass die Laserstrahlung 5a das Austrittsfenster 18 im Wesentlichen ohne jegliche Beeinflussung nach aussen gelangt, wobei die erzeugte Laserstrahlung 5a der das Austrittsfenster 18 durchdrungenen Laserstrahlung 5 im Wesentlichen gleicht. An der Rotationseinheit 3 sind indirekt Emissionsrichtungs-Erfassungsmittel in Form eines Winkeldetektors 16 angeordnet, die ein Erfassen der Winkelausrichtung der Laserstrahlungsumlenkeinheit 15 und somit der jeweiligen Emissionsrichtung α der Laserstrahlung 5 ermöglichen. Der Laserquelle 4 und dem Winkeldetektor 16 sind ein Schaltung 17 zugeordnet, die so verschaltet ist, dass bei der Erzeugung der Laserstrahlung 5a durch die Laserquelle 4 mindestens eine Strahlungsparameter der Laserstrahlung 5a mit der winkelabhängigen Information behaftet wird, aus welche die Emissionsrichtung α abgeleitet werden kann. Beispielsweise wird in Abhängigkeit von der mittels des Winkeldetektors 16 erfassten Stellung der Laserstrahlungsumlenkeinheit 15 ein Signal auf eine Trägerfrequenz der Laserstrahlung 5a aufmodelliert, aus welchem die Emissionsrichtung α eindeutig ableitbar ist. Dieses Signal wird beispielsweise von zwei um n/2 versetzte Sinuswellen oder einer Rampe gebildet. Vorzugsweise ist die Emissionsrichtung α im Bereich von 0° bis 360° eindeutig ableitbar. Für manche Anwendungen mag es jedoch ausreichen, die eindeutige Zuordnung zu einer Emissionsrichtung beispielsweise nur von jeweils 0° bis 180° und 180° bis 360° zu ermöglichen, wobei die Laserstrahlung z.B. bei 90° derjenigen bei 270° gleicht. Für den Einsatz im Bereich der Lagebestimmung von mobilen Arbeitsmaschinen ist es jedoch in der Regel erforderlich, dass mindestens innerhalb eines Quadranten der rotierenden Emissionsrichtung aus der winkelabhängigen Information die Emissionsrichtung α eindeutig ableitbar ist. Verfahren zum Aufmodellieren von eindeutigen Signalen auf eine Trägerfrequenz einer Laserstrahlung sind aus dem Stand der Technik, insbesondere der optischen Datenübertragung, bekannt. Alternativ oder ergänzend ist es selbstverständlich möglich, die Schaltung 17 so zu verschalten, dass bei der Erzeugung der Laserstrahlung 5a durch die Laserquelle 4 die Laserstrahlung 5a durch Intermittieren mit der winkelabhängigen Information behaftet wird. Weitere Verfahren zum Behaften mindestens eines Strahlungsparameters der Laserstrahlung 5a bei deren Erzeugung mit einer winkelabhängigen Information, aus welcher die Emissionsrichtung α ableitbar ist, sind selbstverständlich im Rahmen dieser Erfindung ebenfalls realisierbar.

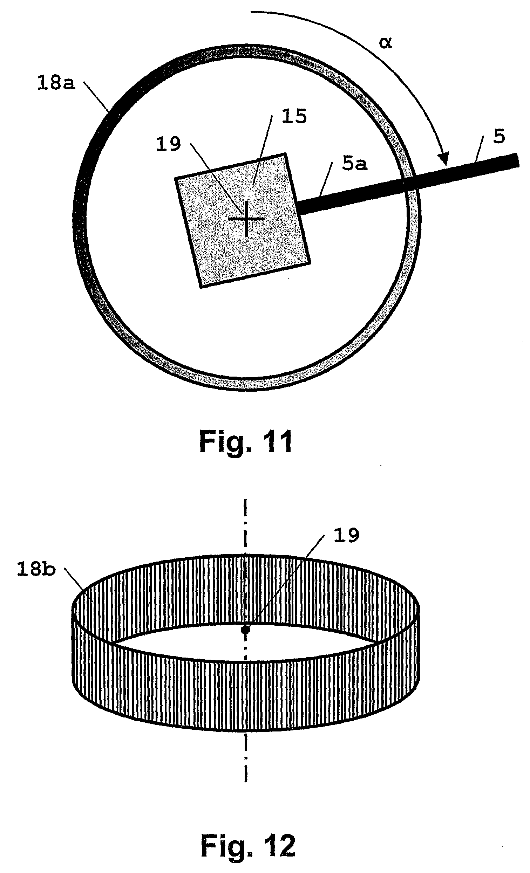

In Fig. 11 ist eine weitere Ausführungsform des Rotationslasers in einer Draufsicht dargestellt. Der Rotationslaser von Fig. 11 entspricht bezüglich der Rotationseinheit 3 und der Laserstrahlungsumlenkeinheit 15 dem Rotationslaser von Fig. 10. Jedoch weist der Rotationslaser von Fig. 11 keinen Winkeldetektor 16 zum Erfassen der Emissionsrichtung α auf, wodurch die Laserquelle eine kontinuierliche Laserstrahlung 5a, die keine winkelabhängige Information trägt, erzeugt. Stattdessen kommt anstelle des Austrittfensters 18 aus Fig. 10 ein ringförmiger optischer Filter oder Polarisator 18a zum Einsatz, der das Rotationszentrum 19 der rotierenden Emissionsrichtung α derart umgibt, dass die Laserstrahlung 5a den Filter oder Polarisator 18a unter Beeinflussung mindestens eines Strahlungsparameters durchdringt und in Form der Laserstrahlung 5 nach aussen dringt. Der Filter oder der Polarisator 18a besitzt entlang seines Ringumfangs zumindest in einem Teilsegment kontinuierlich unterschiedliche optische Eigenschaften, so dass aus der Beeinflussung des mindestens einen Strahlungsparameters die Emissionsrichtung α aus der Laserstrahlung 5 ableitbar ist. Ein derartiger Filter ist beispielsweise als ein Farbfilter mit entlang seines Ringumfangs kontinuierlich unterschiedlichen Transmissionseigenschaften realisierbar. Aus der spektralen Strahlungsverteilung der den Farbfilter durchdrungenen Laserstrahlung 5 kann somit die Emissionsrichtung α ermittelt werden. Der Polarisator ist beispielsweise als ein Linearpolarisator mit entlang seines Ringumfangs unterschiedlichen Polarisationseigenschaften ausbildbar, so dass aus der Polarisationsrichtung der den Polarisator durchdrungenen Laserstrahlung 5 die Emissionsrichtung α ableitbar ist.

Anstelle des Filters oder Polarisators 18a oder ergänzend kann jedoch auch ein ringförmiger Strichcodeträger 18b, wie in Fig. 12 gezeigt, zum Intermittieren der Laserstrahlung 5 in Abhängigkeit von der Emissionsrichtung α eingesetzt werden, der das Rotationszentrum 19 der rotierenden Emissionsrichtung derart umgibt, dass die Laserstrahlung 5a den Strichcodeträger in Teilbereichen durchdringt, so dass aus der Intermittierung der Laserstrahlung 5 die Emissionsrichtung α ableitbar ist. In diesem Fall ist es jedoch erforderlich, dass das Detektieren der Laserstrahlung 5 innerhalb eines gewissen Winkelbereichs, der ein Auslesen des Strichcodes beim Empfang ermöglicht, erfolgt. Dies erfordert beispielsweise einen grossflächigen Detektor oder eine Mehrzahl von aneinander gereihten Detektoren, beispielsweise einem Detektorenarray, zum Empfang der Laserstrahlung 5.

## Patentansprüche

1. Verfahren zum Ermitteln einer horizontalen Lageinformation mindestens eines an einer Höhenreferenzfläche zu orientierenden Objekts (1; 1'), insbesondere einer mobilen Arbeitsmaschine, unter Verwendung wenigstens eines Rotationslasers (2) mit
einer Rotationseinheit (3) und einer Laserquelle (4) zur Emission einer in vertikaler Richtung im Wesentlichen parallelen Laserstrahlung (5) in eine rotierende, horizontale Emissionsrichtung, so dass die Laserstrahlung (5) eine Höhenreferenzfläche für das Objekt (1; 1') aufspannt und wobei die Laserstrahlung (5) eine winkelabhängige Information trägt, aus welcher die Emissionsrichtung ableitbar ist, so dass die Emissionsrichtung mit der Richtung vom Rotationslaser (2) zu dem Objekt (1; 1'), das die Laserstrahlung (5) empfängt, verknüpft ist,
mit den Schritten
• Aussenden der Laserstrahlung (5) durch den Rotationslaser (2),
• erstes Empfangen der Laserstrahlung (5) durch einen ersten Detektor (6a) des Objekts (1),
• definiertes Verändern der Position des ersten Detektors (6a) des Objekts (1) gegenüber seiner Position beim ersten Empfangen der Laserstrahlung (5) in eine veränderte, definiert horizontal beabstandete Position,
• zweites Empfangen der Laserstrahlung (5') am Objekt (1; 1') durch den ersten Detektor (6a),
• Höhenorientieren zumindest einer Komponente des Objekts (1; 1') an der Laserstrahlung (5; 5'),
• Ableiten einer ersten Emissionsrichtung (α₁) der vom ersten Detektor (6a) beim ersten Empfangen empfangenen Laserstrahlung (5) und Ableiten einer zweiten Emissionsrichtung (α₂) der beim zweiten Empfangen empfangenen Laserstrahlung (5'), wobei das Ableiten zumindest einmal aus der winkelabhängigen Information erfolgt, und
• Ableiten der Entfernung (d₁) oder horizontalen Position (P_{Ob}; P_{Ob'}) des Objekts (1; 1') relativ zu der Position (P_{I}) des Rotationslasers (2) aus der Kenntnis der ersten Emissionsrichtung (α₁), der zweiten Emissionsrichtung (α₂) und des definierten Veränderns der Position des ersten Detektors (6a) zwischen dem ersten Empfangen und dem zweiten Empfangen.

2. Verfahren nach Anspruch 1,
**dadurch gekennzeichnet, dass**
das definierte Verändern der Position des ersten Detektors (6a) des Objekts (1) gegenüber seiner Position beim ersten Empfangen der Laserstrahlung (5) in eine veränderte Position durch
ein Bewegen des Objekts (1, 1') um einen bekannten Weg (x) in eine bekannte Richtung (ϕ₂) relativ zum Rotationslaser (2) bei gegenüber dem Objekt (1, 1') fixer Position des ersten Detektors (6a, 6a') erfolgt.

3. Verfahren nach Anspruch 1,
**dadurch gekennzeichnet, dass**
das definierte Verändern der Position des ersten Detektors (6a) des Objekts (1) gegenüber seiner Position beim ersten Empfangen der Laserstrahlung (5) in eine veränderte Position durch
ein definiertes Bewegen des ersten Detektors (6a, 6a') bei im Wesentlichen fixer Position (P_{Ob}) des Objekts (1) erfolgt.

4. Verfahren nach Anspruch 3,
**dadurch gekennzeichnet, dass**
das definierte Bewegen des ersten Detektors (6a, 6a') bei fixer Position (P_{Ob}) des Objekts (1) erfolgt, indem der erste Detektor (6a) des Objekts (1) um eine im Wesentlichen zu der Rotationsachse (8) des Rotationslasers (2) parallelen Achse auf einer Kreisbahn (10) kreist.

5. Verfahren nach Anspruch 4,
**dadurch gekennzeichnet, dass**
die Position (Pₐ) des ersten Detektors (6a) auf der Kreisbahn (10) beim ersten Empfangen der Laserstrahlung (5) im Wesentlichen diametral gegenüber der Position (P_{b}) des ersten Detektors (6a') beim zweiten Empfangen ist, wobei die Verbindungslinie (11) der zwei im Wesentlichen diametralen Positionen (Pₐ, P_{b}) senkrecht zu der Verbindungslinie (12) zwischen dem Rotationslaser (2) und dem auf der parallelen Achse liegenden Kreisbahnzentrum (13) verläuft.

6. Verfahren nach Anspruch 4 oder 5,
**dadurch gekennzeichnet, dass**
• der kreisende erste Detektor (6a, 6a') zwei diametrale Detektionsbereiche (14a, 14b) aufweist, die ein Empfangen im Wesentlichen nur derjenigen Laserstrahlung (5, 5') ermöglichen, die tangential zu der Kreisbahn (10) verläuft und
• das Ableiten der Entfernung (d₁) oder horizontalen Position (P_{Ob}) - und insbesondere der Ausrichtung (ϕ₂) - des Objekts (1) relativ zum Rotationslaser (2) aus der Kenntnis der ersten Emissionsrichtung (α₁), der zweiten Emissionsrichtung (α₂), des Durchmessers (0) der Kreisbahn (10) - und insbesondere der Detektionszeitpunkte oder der Positionen (ρ₁, ρ₂) des ersten Detektors (6a, 6a') beim ersten und zweiten Empfangen - erfolgt.

7. Verfahren nach einem der Ansprüche 1 bis 6,
**gekennzeichnet durch**
die weiteren Schritte
• Empfangen der Laserstrahlung (5_{II}) eines, von dem Rotationslaser (2) beabstandeten, weiteren Rotationslasers (2_{II}) **durch** den ersten Detektor (6a) des Objekts (1),
• Ableiten einer weiteren Emissionsrichtung (α_{II}) der vom ersten Detektor (6a) empfangenen Laserstrahlung (5_{II}) des weiteren Rotationslasers (2_{II}), und
• Ableiten der horizontalen Position (P_{Ob}) des Objekts (1) relativ zu den beiden Rotationslasern (2, 2_{II}) aus der Kenntnis der ersten Emissionsrichtung (α₁), der weiteren Emissionsrichtung (α_{II}) und der Positionen (P_{I}, P_{II}) der beiden Rotationslaser (2, 2_{II}).

## Claims

1. Method for determining an item of horizontal attitude information of at least one object (1; 1') to be oriented with respect to a height reference surface, in particular a mobile work machine, using at least one rotating laser (2), comprising
a rotating unit (3) and a laser source (4) for emission of laser radiation (5) substantially parallel in the vertical direction in a rotating, horizontal emission direction, so that the laser radiation (5) defines a height reference surface for the object (1; 1'), the laser radiation (5) carrying an item of angle-dependent information from which the emission direction can be derived, so that the emission direction is associated with the direction of the rotating laser (2) to the object (1; 1') which receives the laser radiation (5),
comprising the steps
• emission of the laser radiation (5) by the rotating laser (2),
• first reception of the laser radiation (5) by a first detector (6a) of the object (1),
• a defined change in the position of the first detector (6a) of the object (1) relative to its position during the first reception of the laser radiation (5) to a changed position a defined horizontal distance away takes place,
• second reception of the laser radiation (5') at the object (1; 1') by the first detector (6a),
• height orientation of at least one component of the object (1; 1') with the laser radiation (5; 5'),
• derivation of a first emission direction (α₁) of the laser radiation (5) received by the first detector (6a) during the first reception and derivation of a second emission direction (α₂) of the laser radiation (5') received during the second reception, the derivation being effected at least once from the angle-dependent information,
• derivation of the distance (d₁) or horizontal position (P_{0b}; P_{0b'}) of the object (1; 1') relative to the position (P_{I}) of the rotating laser (2) from a knowledge of the first emission direction (α₁), of the second emission direction (α₂) and of the defined change in the position of the first detector (6a) between the first reception and the second reception.

2. Method according to Claim 1, **characterized in that** the defined change of the position of the first detector (6a) of the object (1) relative to its position during the first reception of the laser radiation (5) to a changed position is effected by movement of the object (1, 1') by a known distance (x) in a known direction (ϕ₂) relative to the rotating laser (2) with the position of the first detector (6a, 6a') being fixed relative to the object (1, 1').

3. Method according to Claim 1, **characterized in that** the defined change of the position of the first detector (6a) of the object (1) relative to its position during the first reception of the laser radiation (5) to a changed position is effected by a defined movement of the first detector (6a, 6a') with substantially fixed position (P_{ob}) of the object (1).

4. Method according to Claim 3, **characterized in that** the defined movement of the first detector (6a, 6a') with fixed position (P_{0b}) of the object (1) is effected **in that** the first detector (6a) of the object (1) circles along a circular path (10) about an axis substantially parallel to the axis (8) of rotation of the rotating laser (2).

5. Method according to Claim 4, **characterized in that** the position (Pₐ) of the first detector (6a) on the circular path (10) during the first reception of the laser radiation (5) is substantially diametrically opposite the position (P_{b}) of the first detector (6a') during the second reception, the connecting line (11) of the two substantially diametrically opposite positions (Pₐ, P_{b}) being perpendicular to the connecting line (12) between the rotating laser (2) and the centre (13) of the circular path located on the parallel axis.

6. Method according to Claim 4 or 5, **characterized in that**
• the circling first detector (6a, 6a') has two diametrically opposite detection regions (14a, 14b) which permit reception of substantially only that laser radiation (5, 5') which is tangential to the circular path (10) and
• the derivation of the distance (d₁) or horizontal position (P_{0b}) - and in particular of the orientation (ϕ₂) - of the object (1) relative to the rotating laser (2) is effected from a knowledge of the first emission direction (α₁), of the second emission direction (α₂), of the diameter (ϕ) of the circular path (10) - and in particular of the detection times or the positions (ρ₁, ρ₂) of the first detector (6a, 6a') during the first and second reception.

7. Method according to any of Claims 1 to 6, **characterized by** the further steps
• reception of the laser radiation (5_{II}) of a further rotating laser (2_{II}) a distance away from the rotating laser (2) via the first detector (6a) of the object (1),
• derivation of a further emission direction (α_{II}) of the laser radiation (5_{II}) of the further rotating laser (2_{TT}) received by the first detector (6a), and
• derivation of the horizontal position (P_{0b}) of the object (1) relative to the two rotating lasers (2, 2_{II}) from a knowledge of the first emission direction (α₁), of the further emission direction (α_{II}) and of the positions (P_{I}, P_{II}) of the two rotating lasers (2, 2_{II}).

## Revendications

1. Procédé pour la détermination d'une information de position horizontale d'au moins un objet (1 ; 1') qui doit être orienté sur une surface de référence de hauteur, en particulier d'une machine de travail mobile, en utilisant au moins un laser rotatif (2) avec
une unité rotative (3) et une source laser (4) pour l'émission d'un rayonnement laser (5) substantiellement parallèle dans le sens vertical dans une direction d'émission rotative horizontale si bien que le rayonnement laser (5) couvre une surface de référence de hauteur pour l'objet (1 ; 1') et cependant que le rayonnement laser (5) porte une information angulaire à partir de laquelle la direction d'émission peut être déduite si bien que la direction d'émission est combinée avec la direction du laser rotatif (2) par rapport à l'objet (1 ; 1') qui reçoit le rayonnement laser (5)
avec les étapes :
• émission du rayonnement laser (5) par le laser rotatif (2),
• première réception du rayonnement laser (5) par un premier détecteur (6a) de l'objet (1),
• modification définie de la position du premier détecteur (6a) de l'objet (1) par rapport à sa position lors de la première réception du rayonnement laser (5) dans une position modifiée, espacée horizontalement de manière définie,
• seconde réception du rayonnement laser (5') sur l'objet (1 ; 1') par le premier détecteur (6a),
• orientation en hauteur d'au moins une composante de l'objet (1 ; 1') sur le rayonnement laser (5 ; 5'),
• déduction d'une première direction d'émission (α₁) du rayonnement laser (5) reçu par le premier détecteur (6a) lors de la première réception et déduction d'une seconde direction d'émission (α₂) du rayonnement laser (5') reçu lors de la seconde réception, cependant que la déduction se fait au moins une fois à partir de l'information angulaire et
• déduction de la distance (d₁) ou de la position horizontale (P_{ob} ; P_{ob'}) de l'objet (1 ; 1') par rapport à la position (P₁) du laser rotatif (2) à partir de la connaissance de la première direction d'émission (α₁), de la seconde direction d'émission (α₂) et de la modification définie de la position du premier détecteur (6a) entre la première réception et la seconde réception.

2. Procédé selon la revendication 1, **caractérisé en ce que** la modification définie de la position du premier détecteur (6a) de l'objet (1) par rapport à sa position lors de la première réception du rayonnement laser (5) dans une position modifiée se fait par un déplacement de l'objet (1, 1') d'un trajet connu (x) dans une direction connue (Φ₂) par rapport au laser rotatif (2) pour une position fixe du premier détecteur (6a, 6a') par rapport à l'objet (1, 1').

3. Procédé selon la revendication 1, **caractérisé en ce que** la modification définie de la position du premier détecteur (6a) de l'objet (1) par rapport à sa position lors de la première réception du rayonnement laser (5) dans une position modifiée se fait par un déplacement défini du premier détecteur (6a, 6a') pour une position substantiellement fixe (P_{ob}) de l'objet (1).

4. Procédé selon la revendication 3, **caractérisé en ce que** le déplacement défini du premier détecteur (6a, 6a') pour une position fixe (P_{ob}) de l'objet (1) se fait par le fait que le premier détecteur (6a) de l'objet (1) tourne sur une trajectoire circulaire (10) autour d'un axe substantiellement parallèle à l'axe de rotation (8) du laser rotatif (2).

5. Procédé selon la revendication 4, **caractérisé en ce que** la position (Pₐ) du premier détecteur (6a) sur la trajectoire circulaire (10) est, lors de la première réception du rayonnement laser (5) substantiellement diamétrale par rapport à la position (P_{b}) du premier détecteur (6a') lors de la seconde réception, cependant que la ligne de jonction (11) des deux positions substantiellement diamétrales (Pₐ, P_{b}) est perpendiculaire à la ligne de jonction (12) entre le laser rotatif (2) et le centre de la trajectoire circulaire (13) qui est situé sur l'axe parallèle.

6. Procédé selon la revendication 4 ou 5, **caractérisé en ce que**
• le premier détecteur qui fait un mouvement rotatif (6a, 6a') présente deux zones de détection diamétrales (14a, 14b) qui permettent une réception substantiellement seulement du rayonnement laser (5, 5') qui est tangentiel par rapport à la trajectoire circulaire (10) et
• la déduction de la distance (d₁) ou de la position horizontale (P_{ob}) - et en particulier de l'alignement (Φ₂) - de l'objet (1) par rapport au laser rotatif (2) se fait à partir de la connaissance de la première direction d'émission (α₁), de la seconde direction d'émission (α₂), du diamètre (ø) de la trajectoire circulaire (10) - et en particulier des moments de détection ou des positions (ρ₁, ρ₂) du premier détecteur (6a, 6a') lors de la première et de la seconde réception.

7. Procédé selon l'une des revendications 1 à 6, **caractérisé par** les autres étapes :
• réception du rayonnement laser (5_{II}) d'un autre laser rotatif (2_{II}) espacé du laser rotatif (2) par le premier détecteur (6a) de l'objet (1),
• déduction d'une autre direction d'émission (α_{II}) du rayonnement laser (5_{II}) de l'autre laser rotatif (2_{II}) reçu par le premier détecteur (6a) et
• déduction de la position horizontale (P_{ob}) de l'objet (1) par rapport aux deux lasers rotatifs (2, 2_{II}) à partir de la connaissance de la première direction d'émission (α₁), de l'autre direction d'émission (α_{II}) et des positions (P_{I}, P_{II}) des deux lasers rotatifs (2, 2_{II}).
